# EUROPÄISCHE PATENTSCHRIFT

(11) **EP 1 620 287 B1**
(45) Veröffentlichungstag und Bekanntmachung des Hinweises auf die Patenterteilung: **15.11.2006**
(21) Anmeldenummer: 04705006.7
(22) Anmeldetag: 24.01.2004
(51) Int. Cl.: B60K 17/02, B60K 17/16, F16H 57/02

(54) **ANTRIEBSAGGREGAT FÜR KRAFTFAHRZEUGE**
DRIVE UNIT FOR MOTOR VEHICLES
ENSEMBLE MOTEUR POUR VEHICULES

(30) Priorität: 25.04.2003 DE 10318742
(43) Veröffentlichungstag der Anmeldung: 01.02.2006
(73) Patentinhaber: AUDI AG, 85045 Ingolstadt (DE)
(72) Erfinder: MÄRKL, Johann, 85128 Nassenfels (DE)
(74) Vertreter: Lehle, Josef
(86) Internationale Anmeldenummer: PCT/EP2004/000603
(87) Internationale Veröffentlichungsnummer: WO 2004/096596

(56) Entgegenhaltungen:
- EP-A- 1 120 587
- DE-A- 3 418 557
- FR-A- 2 028 634
- GB-A- 1 003 863
- US-A- 4 308 763
- US-A- 5 743 156

## Beschreibung

Die Erfindung betrifft ein Antriebsaggregat für Kraftfahrzeuge, gemäß dem Oberbegriff des Patentanspruches 1.

Ein derartiges, längs eingebautes Antriebsaggregat mit in das Geschwindigkeits-Wechselgetriebe integriertem Vorderachs-Differenzial zeigt beispielsweise die EP 1 120 587 A1. Dabei ist das Differenzial in herkömmlicher Weise axial hinter der an der Kurbelwelle der Brennkraftmaschine angeordneten Trennkupplung positioniert, woraus sich ein gewisser, über die Drehachsen der angetriebenen Vorderräder des Kraftfahrzeuges definierter Überhang der Brennkraftmaschine und eine dementsprechende Gewichtsverteilung ergibt. Es ist im Rahmen der konstruktiven Gegebenheiten das Bestreben, den besagten Überhang möglichst gering auszubilden.

Durch die DE 34 18 557 C2 ist ferner ein Antriebsaggregat bekannt, bei dem das Differenzial axial vor der Trennkupplung angeordnet ist; eine solche Lösung erfordert allerdings einen beträchtlichen konstruktiven Aufwand, z.B. durch den starken seitlichen Versatz der das Differenzial antreibenden Abtriebswelle des Wechselgetriebes und durch das erforderliche Hindurchführen der einen Achswelle des Differenziales durch die Ölwanne der Brennkraftmaschine.

Ein weiteres Antriebsaggregat ist aus der gattungsgemäßen US-A-5743156 bekannt.

Aufgabe der Erfindung ist es, ein Antriebsaggregat der gattungsgemäßen Art vorzuschlagen, das bei baulich nur geringem Mehraufwand eine Verkürzung des Antriebsaggregates, insbesondere des Abstandes zwischen Motor-/Getriebeflansch und Achsdifferenzial, oder einen zusätzlichen Bauraum für kupplungsseitige Aggregatteile ermöglicht.

Diese Aufgabe wird erfindungsgemäß mit den kennzeichnenden Merkmalen des Patentanspruches 1 gelöst. Die Lösung ist sowohl bei Frontantrieb als auch bei Heckantrieb einsetzbar. Vorteilhafte Weiterbildungen der Erfindung beschreiben die weiteren Patentansprüche.

Erfindungsgemäß wird vorgeschlagen, dass das Tellerrad des Differenziales in der Draufsicht gesehen seitlich der Trennkupplung und diese in Richtung ihrer Achse teilweise axial überragend angeordnet ist. Mit dem erfindungsgemäßen Vorschlag gelingt eine deutliche Verkürzung des Antriebsaggregates bzw. eine vorteilhafte Verschiebung des Differenziales mit den abgehenden Achswellen nach vorne, wodurch der besagte Überhang vermindert und eine gleichmäßigere Gewichtsverteilung des Kraftfahrzeuges erreicht ist. Alternativ kann der in axialer Richtung gewonnene Bauraum beispielsweise zum zusätzlichen Einbau einer Starter-Generator Vorrichtung verwendet werden.

In vorteilhafter Weiterbildung der Erfindung soll zudem das die Achskegelräder und Planetenräder aufweisende Ausgleichsgehäuse des Differenziales seitlich neben der Trennkupplung positioniert sein. Damit wird erreicht, dass bei geringst nötigen seitlichen Versatz der Abtriebswelle des Wechselgetriebes die Trennkupplung und das Tellerrad mit Ausgleichsgehäuse nebeneinander positionierbar und ohne funktionelle Beeinträchtigung betreibbar sind.

Besonders vorteilhaft kann die Trennkupplung eine in der radialen Erstreckung klein bauende Mehrscheiben-Reibungskupplung an sich bekannter Bauart sein. Die Mehrscheiben-Reibungskupplung kann eine Nass- oder Trockenreibungskupplung sein, z.B. eine Zweischeiben-Trockenkupplung mit entsprechend der erhöhten Reibfläche vermindertem Durchmesser.

Des weiteren kann das Differenzialgehäuse des Differenziales des Wechselgetriebes teilweise um die Trennkupplung herum gebaut sein, wobei das die Trennkupplung tragende Schwungrad der Brennkraftmaschine in radialer Richtung das Tellerrad überragt. Damit wird eine besonders vorteilhafte "verschachtelte" Bauweise geschaffen, bei der das Schwungrad der Brennkraftmaschine mit dem Starterkranz für den Anlasser im wesentlichen baulich unverändert bleiben kann, während die Trennkupplung entsprechend modifiziert ist.

Besonders vorteilhaft kann ferner das Differenzialgehäuse teilweise durch das angrenzende Gehäuse der Brennkraftmaschine gebildet sein und/oder der das Differenzial seitlich abdeckende, einteilige Gehäusedeckel teilweise das Gehäuse der Brennkraftmaschine mit abdecken. Daraus resultiert neben einer gießtechnisch besonders günstigen Konstruktion eine zusätzliche Versteifung des Antriebsaggregates im Bereich der Schraubverbindung zwischen der Brennkraftmaschine und dem angrenzenden, in das Gehäuse des Wechselgetriebes integriertem Differenzial.

Es ist auch eine Ausführungsform möglich, bei der der einteilige Gehäusedeckel etwas den Motorflansch überdeckt und der Gehäusedeckel in Getriebelängsrichtung mittels Bolzen gegenüber dem Motorflansch verspannt ist (mittels Verschraubung).

Das Wechselgetriebe kann ferner eine Wellenanordnung mit einer Eingangswelle und einer das Antriebsritzel für den Antrieb des Differenziales tragenden Abtriebswelle aufweisen. Dies ergibt eine besonders vorteilhafte, baulich einfache Getriebekonstruktion mit günstigem Getriebewirkungsgrad aufgrund verminderter Zahneingriffe; eine dritte Welle, z.B. eine Vorgelegewelle, kann dementsprechend entfallen. Das Antriebsritzel ist dabei so dimensioniert, dass ein genau definierter, vorbestimmter Abstand zwischen der Eingangswelle und der Abtriebswelle einstellbar ist.

Dabei können die Eingangswelle und die Abtriebswelle z. B. achsparallel ausgerichtet sein. In einer alternativen Ausführungsform hierzu können die Eingangswelle und die Abtriebswelle wenigstens bereichsweise schräg zueinander verlaufen dergestalt, dass das Antriebsritzel und das Tellerrad des Differenziales beispielsweise als Beveloid-Räder ausgeführt sind, so dass die Abtriebswelle in Richtung auf die Eingangswelle zu verläuft. Somit kann der Abstand zwischen der Eingangswelle und der Abtriebswelle verkürzt werden, wobei diese Maßnahme zusätzlich dazu führen kann, die Baulänge des Getriebes kurz zu halten. D. h., dass je nach gewünschten Abstand zwischen der Eingangswelle und der Abtriebswelle entweder der Ritzeldurchmesser des Antriebsritzels dementsprechend gewählt werden, das Antriebsritzel und das Tellerrad als Beveloid-Räder ausgeführt sein oder eine Kombination von beidem im Wechselgetriebe verwirklicht sein, kann.

Insbesondere bei einer achsparallelen Ausführung der Eingangswelle und der Abtriebswelle können vorteilhaft die Achsabstände zwischen der Eingangswelle und der Abtriebswelle zur Herstellung eines großen seitlichen Versatzes entsprechend vergrößert sein. Eine radiale Vergrößerung der entsprechenden Zahnradsätze ermöglicht ggf. zudem eine weitere Verkürzung der Baulänge des Wechselgetriebes, auch wenn sich diese nicht auf die besagte Verkürzung des Überhanges auswirkt. Andererseits kann durch eine Verkürzung des Achsabstandes durch z. B. einen "längeren" Kegeltrieb, d. h. größeres Antriebsritzel, und die dadurch einhergehende Verkürzung des Abstandes zwischen der Eingangswelle und der Abtriebswelle aber auch eine kürzere Übersetzung erreicht werden, falls dies gewünscht ist.

Des weiteren kann vorteilhaft die eine Achswelle des Differenziales unterhalb der Eingangswelle des Wechselgetriebes und axial eng an die Trennkupplung anschließend zur anderen Abtriebsseite des Differenziales verlaufen. Ferner kann die Abtriebswelle derart seitlich zur Eingangswelle verschwenkt angeordnet sein, dass die besagte Achswelle dicht unterhalb oder dicht oberhalb der Eingangswelle diese kreuzt. Diese Maßnahmen tragen sowohl zu einer optimalen, im Rahmen der konstruktiven Gegebenheiten möglichen Verkürzung des Antriebsaggregates als auch zu einer verbesserten Bodenfreiheit des Kraftfahrzeuges bei.

Ein Ausführungsbeispiel der Erfindung ist im Folgenden mit weiteren Einzelheiten näher beschrieben.

Die anliegende schematische Zeichnung zeigt in:
**Fig. 1** ein frontseitiges Antriebsaggregat für Kraftfahrzeuge mit einer nur angedeuteten Brennkraftmaschine, einem teilweise dargestellten Geschwindigkeits-Wechselgetriebe mit integriertem Differenzial und einer Mehrscheiben-Reibungskupplung in einer Draufsicht;
**Fig. 2** eine Seitenansicht auf den Gehäusedeckel des Differenziales im Bereich der Trennebene zwischen der Brennkraftmaschine und dem Geschwindigkeits-Wechselgetriebe;
**Fig. 2a** eine Seitenansicht auf den Gehäusedeckel des Differenziales im Bereich des Motorflansches zwischen der Brennkraftmaschine und dem Geschwindigkeits-Wechselgetriebe;
**Fig. 3** die Anordnung des Differenziales, der Getriebewellen und der Mehrscheiben-Reibungskupplung gemäß Fig. 1, jedoch ohne dargestellte Gehäuseabschnitte; und
**Fig. 4** die Anordnung gemäß Fig. 3 in einer Ansicht entsprechend Pfeil X.

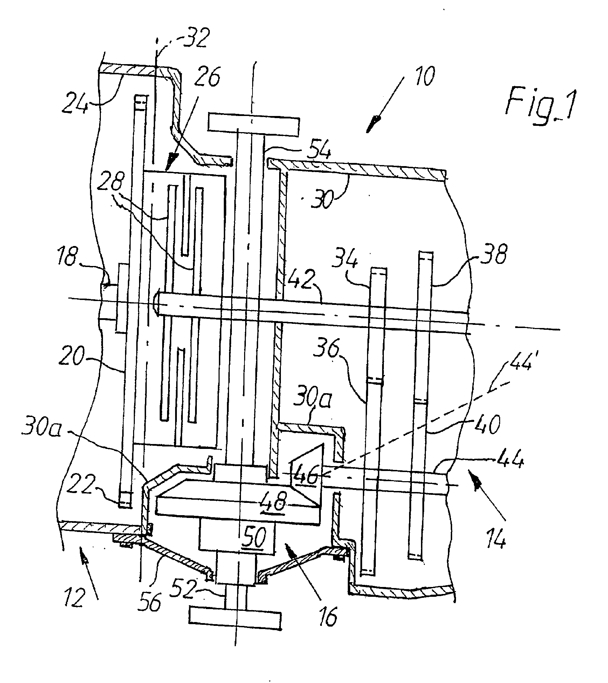

In der **Fig. 1** ist stark schematisiert ein längs in ein Kraftfahrzeug einbaubares, frontseitiges Antriebsaggregat 10 gezeigt, mit einer nur angedeuteten Brennkraftmaschine 12 und einem nachgeschaltetem Geschwindigkeits-Wechselgetriebe 14 mit integriertem Differenzial 16. Die genannten Bauteile sind nur soweit beschrieben, als dies für die vorliegende Erfindung erforderlich ist; im übrigen können die Bauteile dem Fachmann bekannter Bauart sein bzw. dem Stand der Technik entsprechen.

An der Kurbelwelle 18 der Brennkraftmaschine 12 ist ein Schwungrad 20 mit einem umfangsseitig aufgeschrumpften Starterzahnkranz 22 befestigt. Die Kurbelwelle 18 ist in nicht dargestellter Weise in dem Gehäuse 24 der Brennkraftmaschine 12 drehbar gelagert.

An dem Schwungrad 20 der Brennkraftmaschine 12 ist eine Mehrscheiben-Reibungskupplung 26 als Trennkupplung angeordnet, die im Ausführungsbeispiel eine Doppel-Trockenreibungskupplung bekannter Bauart mit zwei Reibscheiben 28 ist. Die Kupplungsbetätigung bildet nicht Gegenstand der Erfindung und ist deshalb nicht dargestellt. Aufgrund der zwei Reibscheiben 28 kann die Trennkupplung 26 in radialer Richtung kleiner bzw. mit geringerem Außenumfang ausgeführt sein, bei einer gleichen oder sogar größeren Antriebs-Übertragungsleistung im Vergleich beispielsweise einer Einscheiben-Trockenreibungskupplung.

An das Gehäuse 24 der Brennkraftmaschine 12 ist das Gehäuse 30 des Geschwindigkeits-Wechselgetriebes 14 in der eingezeichneten, senkrechten Trennebene 32 angeflanscht, wobei der in das Gehäuse 30 integrierte Gehäuseabschnitt 30a des Differenziales 16 in noch zu beschreibender Weise ausgebildet ist.

Das Wechselgetriebe 14 ist ein Schaltgetriebe mit mehreren Gängen, wobei der einfacheren Darstellung wegen nur die Zahnradsätze mit den Zahnrädern 34, 36 und 38, 40 für den ersten und den zweiten Vorwärts-Gang des Wechselgetriebes 14 gezeigt sind. Der Ordnung halber soll betont werden, dass eine Achse oder Welle des Wechselgetriebes zur Aufnahme eines Umkehrzahnrades für einen Rückwärtsgang des Wechselgetriebes 14 nicht zu der noch zu beschreibenden Wellenanordnung zählt.

Die Zahnräder 34, 38 (und weitere) sitzen auf der Eingangswelle 42 und die Zahnräder 36, 40 (und weitere) auf der Abtriebswelle 44 des Wechselgetriebes 14. Die Zahnradsätze 34, 36 bzw. 38, 40 sind über nicht dargestellte Synchronkupplungen zum Schalten der Übersetzungen bzw. Gänge des Wechselgetriebes 14 aktivierbar.

Ferner trägt die Abtriebswelle 44 ein Antriebsritzel 46, das mit einem Tellerrad 48 des Kegelrad-Differenziales 16 kämmt. Das Differenzial 16 treibt in bekannter Weise über in einem Ausgleichsgehäuse 50 gelagerte Achskegelräder und Planetenräder (nicht dargestellt) zwei im Differenzialgehäuse 30a drehbar gelagerte Achshalbwellen 52, 54 an. Während die auf der Zeichnung linke Achshalbwelle 52 nur durch den großen Gehäusedeckel 56 des Differenziales 16 geführt ist, erstreckt sich die rechte Achshalbwelle 54 - die Eingangswelle 42 des Wechselgetriebes 14 kreuzend - bis zum entgegengesetzt liegenden Gehäuseabschnitt des Differenzialgehäuses 30a. An die Achshalbwellen 52, 54 sind in bekannter Weise die die Vorderräder des Kraftfahrzeuges antreibenden Antriebswellen (nicht dargestellt) angeschlossen.

Die Eingangswelle 42 und die Abtriebswelle 44 können, wie in **Fig. 1 und 3** dargestellt, achsparallel verlaufen. Wird eine geringeren Abstand (Strecke C, Fig. 3) zwischen der Eingangswelle 42 und der Abtriebswelle 44 für eine bestimmte Getriebeauslegung benötigt, so können einerseits der Ritzeldurchmesser des Antriebsritzels 46 vergrößert werden und/oder andererseits das Antriebsritzel 46 und das Tellerrad 48 des Differenzial 16 jeweils z. B. als Beveloid-Räder ausgeführt werden. Durch letztere Maßnahme wird erreicht, dass dann die Abtriebswelle 44' schräg in Richtung auf die Eingangswelle 42 zu verläuft, was schematisch mit einer strichlierten Linie in Fig. 1 eingezeichnet ist. Mit an sich bekannten Gelenkstücken (nicht mit dargestellt) kann die Abtriebswelle 44' bei Erreichen des gewünschten Abstandes zwischen der Eingangswelle 42 und der Abtriebswelle 44' wieder in ein achsparallele Ausrichtung zur Eingangswelle 42 gebracht werden.

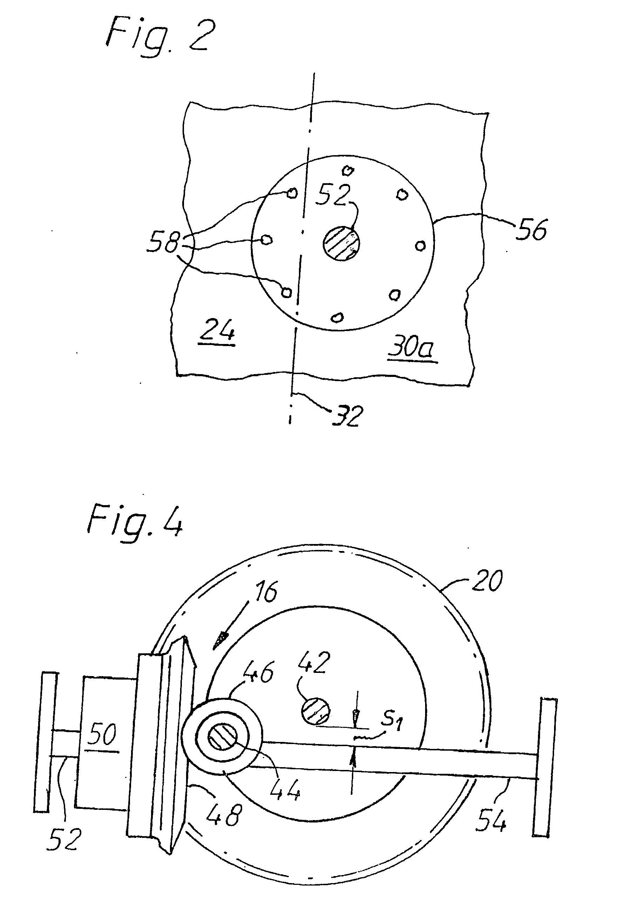

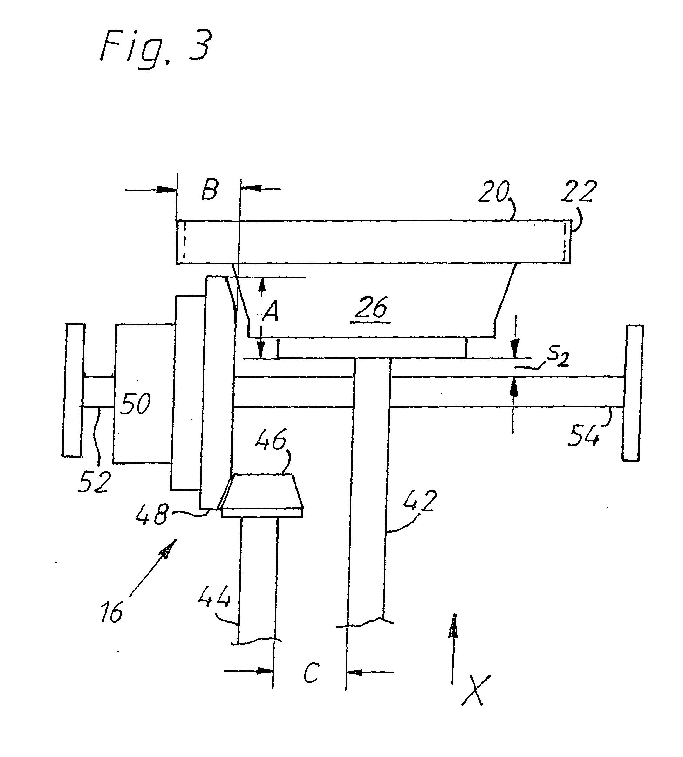

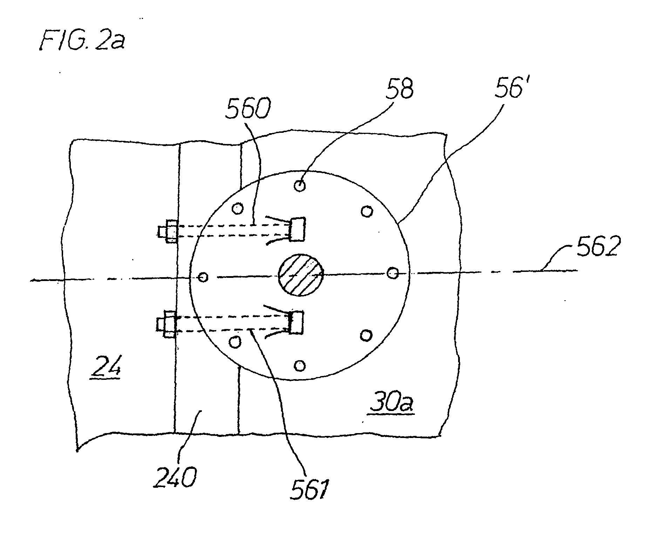

Wie aus der Zeichnung **Fig. 1 und 2** ersichtlich ist, kann sich der große Gehäusedeckel 56 des Differenziales 16 über die besagte Trennebene 32 zwischen dem Maschinengehäuse 24 und dem Gehäuse 30 des Wechselgetriebes 14 nach vorne hinaus erstrecken, so dass der einteilig ausgeführte Gehäusedeckel 56 abschnittsweise das Maschinengehäuse 24 überragt und mit diesem sowie mit dem Gehäuseabschnitt 30a des Differenziales 16 verschraubt ist (vgl. **Fig. 2,** allgemein mit 58 bezeichnete Schrauben).

Nach einer anderen Ausführungsform kann der Gehäusedeckel 56' des Differenziales 16' den Flansch 240 des Antriebsaggregats 24 überdecken. Dabei können in den Gehäusedeckel 56' längs eingeführte Verbindungsmittel 560, 561, beispielsweise lange Schrauben, mit dem Flansch 240 des Antriebsaggregats 24 verbunden (verschraubt) sein (**Fig. 2a**).

Wie die **Fig. 1, 3 und 4** zeigen, ist das die Achskegelräder und Planetenräder (nicht ersichtlich) aufnehmende Ausgleichsgehäuse 50 und das Tellerrad 48 des Differenziales 16 seitlich neben der Trennkupplung 26 positioniert, wobei durch den verminderten Außenumfang der Trennkupplung 26 der dazu erforderliche Seitenversatz des Differenziales 16 geringer gehalten werden kann. Durch den Seitenversatz wiederum kann das Differenzial 16 in größerem Maße nach vorne (auf der Zeichnung Fig. 1 nach links) verlegt werden, wobei das Tellerrad 48 die Trennkupplung 26 um die in der **Fig. 3** eingezeichnete Strecke A axial überragt.

Ferner ist, wie aus **Fig. 1** ersichtlich, das Differenzialgehäuse 30a des Differenziales 16 des Wechselgetriebes 14 teilweise um die Trennkupplung 26 herum gebaut, wobei das die Trennkupplung 26 tragende Schwungrad 20 mit dem Zahnkranz 22 der Brennkraftmaschine 12 in radialer Richtung das Tellerrad 48 um das in der **Fig. 3** eingezeichnete Maß B überragt.

Durch den vorbeschriebenen, nicht zu großen seitlichen Versatz des Differenziales 16 kann ferner das Wechselgetriebe 14 mit nur zwei achsparallelen Wellenanordnungen bzw. mit nur der Eingangswelle 42 und der das Ritzel 46 für den Antrieb des Differenziales 16 tragenden Abtriebswelle 44 ausgeführt sein. Das heißt, es kann vorteilhaft auf eine dritte Welle, z.B. eine Vorgelegewelle, zur Erzielung des benötigten Achsabstandes zwischen Eingangswelle 42 und Abtriebswelle 44 verzichtet werden.

Dabei sind zudem die Zahnräder 34, 36 und 38, 40 (und weitere Zahnräder) für die Übersetzungen des Wechselgetriebes 14 zur Erzielung des benötigten seitlichen Versatzes des Differenziales 16 bzw. des Achsabstandes zwischen der Eingangswelle 42 und der Abtriebswelle 44 im Durchmesser vergrößert ausgebildet, ggf. bei unverändert vorgegebenen Übersetzungsverhältnissen. Ggf. können die Zahnräder 34, 36 und 38, 40 sowie weitere Gangzahnräder durch die Durchmesservergrößerung in deren Breite vermindert werden, so dass eine Zunahme der rotierenden Massen des Wechselgetriebes 14 vermeidbar und dessen Baulänge verkürzbar ist.

Die längere Achswelle 54 des Differenziales 16 verläuft, wie insbesondere in **Fig. 4** ersichtlich ist, mit einem geringem Abstand S₁ unterhalb der Eingangswelle 42 des Wechselgetriebes 14 und eng an die Trennkupplung 26 anschließend (vgl. Abstand S₂ in der **Fig. 3)** zur anderen Abtriebsseite des Differenziales 16.

Schließlich ist die Abtriebswelle 44 des Wechselgetriebes 14, wie insbesondere die **Fig. 4** erkennen lässt, derart seitlich zur Eingangswelle 42 verschwenkt angeordnet, dass die besagte Achswelle 54 wie vorbeschrieben dicht unterhalb der Eingangswelle 42 diese kreuzt (Abstand S₁).

Die Erfindung ist nicht auf das beschriebene Ausführungsbeispiel beschränkt. So kann anstelle eines nach vorne Verschiebens des Differenziales 16 der gewonnene Bauraum auch zum zusätzlichen Einbau einer Starter-Generator Vorrichtung verwendet werden, mittels der in bekannter Weise die Brennkraftmaschine 12 gestartet und ggf. das Kraftfahrzeug über das Wechselgetriebe 14 elektrisch angetrieben werden kann und/oder im Generatorbetrieb das elektrische Bordnetz mit Strom versorgbar ist.

## Patentansprüche

1. Antriebsaggregat (10) für Kraftfahrzeuge, mit einer Brennkraftmaschine, einem nachgeschalteten Geschwindigkeits-Wechselgetriebe (14) mit integriertem Differenzial (16) und einer zwischen Brennkraftmaschine und Wechselgetriebe angeordneten Trennkupplung (26), wobei das Differenzial (16) über einen Kegeltrieb mit einem Antriebsritzel (46) auf einer Abtriebswelle (44) des Wechselgetriebes und ein Tellerrad (48) angetrieben ist, **dadurch gekennzeichnet, dass** das Tellerrad (48) des Differenzials (16) in der Draufsicht gesehen seitlich der Trennkupplung (26) und diese in Richtung ihrer Achse teilweise axial überragend (A) angeordnet ist.

2. Antriebsaggregat nach Anspruch 1, **dadurch gekennzeichnet, dass** zudem das die Achskegelräder und Planetenräder aufnehmende Ausgleichsgehäuse (50) des Differenziales (16) seitlich neben der Trennkupplung (26) positioniert ist.

3. Antriebsaggregat nach Anspruch 1 oder 2, **dadurch gekennzeichnet, dass** die Trennkupplung eine in der radialen Erstreckung klein bauende Mehrscheiben-Reibungskupplung (26) ist.

4. Antriebsaggregat nach einem oder mehreren der vorhergehenden Ansprüche, **dadurch gekennzeichnet, dass** das Differenzialgehäuse (30a) des Differenziales (16) des Wechselgetriebes (14) teilweise um die Trennkupplung (26) herum gebaut ist, wobei das die Trennkupplung (26) tragende Schwungrad (20) der Brennkraftmaschine (12) in radialer Richtung das Tellerrad (48) überragt (Strecke B, Fig. 3).

5. Antriebsaggregat nach einem oder mehreren der vorhergehenden Ansprüche, **dadurch gekennzeichnet, dass** das Differenzialgehäuse (30a) teilweise durch das angrenzende Gehäuse (24) der Brennkraftmaschine (12) gebildet ist und/oder dass der das Differenzial (16) seitlich abdeckende, einteilige Gehäusedeckel (56) teilweise das Gehäuse (24) der Brennkraftmaschine (12) mit abdeckt.

6. Antriebsaggregat nach einem oder mehreren der vorhergehenden Ansprüche, **dadurch gekennzeichnet, dass** der das Differenzial (16) seitlich abdeckende, einteilige Gehäusedeckel (56') teilweise den Motorflansch (240) überdeckt und das Getriebe mit dem Antriebsaggregat (24) verbunden ist, in dem Verbindungsmittel (560, 561), vorzugsweise lange Schrauben, in etwa längs zur Getriebelängsachse (562) unter die Gehäusedeckelkontur eingeführt sind und mit, dem Motorflansch (240) verbunden sind.

7. Antriebsaggregat nach einem oder mehreren der Ansprüche 1 bis 6, **dadurch gekennzeichnet, dass** das Wechselgetriebe (14) eine Wellenanordnung mit einer Eingangswelle (42) und einer das Antriebsritzel (46) für den Antrieb des Differenziales (16) tragenden Abtriebswelle (44) aufweist, wobei das - Antriebsritzel (46) so dimensioniert ist, dass zwischen der Eingangswelle (42) und der Abtriebswelle (44) ein vorbestimmter Abstand (Strecke C, Fig. 3) gebildet ist.

8. Antriebsaggregat nach Anspruch 7, **dadurch gekennzeichnet, dass** die Eingangswelle (42) und die Abtriebswelle (44) achsparallel ausgerichtet sind.

9. Antriebsaggregat, insbesondere nach Anspruch 7, **dadurch gekennzeichnet, dass** die Abtriebswelle (44') vom Antriebsritzelbereich ausgehend wenigstens bereichsweise in Richtung auf die Eingangswelle (42) zu verläuft für eine zunehmende Verkürzung des Abstandes zwischen der Eingangswelle (42) und der Abtriebswelle (44').

10. Antriebsaggregat nach einem oder mehreren der Ansprüche 1 bis 7, **dadurch gekennzeichnet, dass** die Achsabstände zwischen der Eingangswelle (42) und der Abtriebswelle (44) zur Herstellung eines großen seitlichen Versatzes entsprechend vergrößert sind.

11. Antriebsaggregat nach Anspruch 10, **dadurch gekennzeichnet, dass** die Zahnräder (34, 36, 38, 40) für die Übersetzungen des Wechselgetriebes (14) zur Erzielung des großen seitlichen Versatzes zwischen der Eingangswelle (42) und der Abtriebswelle (44) vergrößert ausgebildet sind.

12. Antriebsaggregat nach einem oder mehreren der vorhergehenden Ansprüche, **dadurch gekennzeichnet, dass** die eine Achswelle (54) des Differenziales (16) unterhalb der Eingangswelle (42) des Wechselgetriebes (14) und mit geringem Abstand (S₂) an die Trennkupplung (26) anschließend zur anderen Abtriebsseite des Differenziales (16) verläuft.

13. Antriebsaggregat nach einem oder mehreren der vorhergehenden Ansprüche, **dadurch gekennzeichnet, dass** die Abtriebswelle (44) derart seitlich zur Eingangswelle (42) verschwenkt angeordnet ist, dass die besagte Achswelle (54) in geringem Abstand (S₁) unterhalb der Eingangswelle (42) diese kreuzt.

## Claims

1. Drive unit (10) for motor vehicles, comprising an internal combustion engine, a downstream speed-change gearbox (14) with an integrated differential (16) and a disconnect-type clutch (26) arranged between the internal combustion engine and the gearbox, the differential (16) being driven by means of a bevel-gear drive with a drive pinion (46) on an output shaft (44) of the gearbox and a crown wheel (48), **characterised in that** the crown wheel (48) of the differential (16) is arranged laterally of the disconnect-type clutch (26) in such a manner that it partly projects axially therefrom (A) in the direction of its axis when viewed from above.

2. Drive unit according to claim 1, **characterised in that** the housing (50) of the differential (16) receiving the differential side gears and planetary gears is additionally positioned laterally alongside the disconnect-type clutch (26).

3. Drive unit according to claim 1 or claim 2, **characterised in that** the disconnect-type clutch is a multi-plate friction clutch (26) with small radial dimensions.

4. Drive unit according to one or more of the preceding claims, **characterised in that** the housing (30a) of the differential (16) of the gearbox (14) is built partly around the disconnect-type clutch (26), the flywheel (20) of the internal combustion engine (12) bearing the disconnect-type clutch (26) projecting beyond the crown wheel (48) in the radial direction (distance B, Fig. 3).

5. Drive unit according to one or more of the preceding claims, **characterised in that** the differential housing (30a) is formed partly by the adjoining housing (24) of the internal combustion engine (12) and/or that the one-part housing cover (56) laterally covering the differential (16) also partly covers the housing (24) of the internal combustion engine (12).

6. Drive unit according to one or more of the preceding claims, **characterised in that** the one-part housing cover (56') laterally covering the differential (16) partly covers the engine flange (240) and the gearbox is connected to the drive unit (24) in that connecting means (560, 561), preferably long screws, are inserted below the contour of the housing cover approximately longitudinally relative to the longitudinal axis (562) of the gearbox and are connected to the engine flange (240).

7. Drive unit according to one or more of claims 1 to 6, **characterised in that** the gearbox (14) has a shaft arrangement with an input shaft (42) and an output shaft (44) bearing the drive pinion (46) for the drive of the differential (16), the drive pinion (46) being dimensioned in such a manner that a predetermined space is formed between the input shaft (42) and the output shaft (44) (distance C, Fig. 3).

8. Drive unit according to claim 7, **characterised in that** the input shaft (42) and the output shaft (44) are aligned in an axially parallel manner.

9. Drive unit, in particular according to claim 7, **characterised in that**, departing from the region of the drive pinion, the output shaft (44') extends at least partly in the direction of the input shaft (42) in order to increasingly reduce the distance between the input shaft (42) and the output shaft (44').

10. Drive unit according to one or more of claims 1 to 7, **characterised in that** the distances between the input shaft (42) and the output shaft (44) are increased accordingly in order to produce a large lateral offset.

11. Drive unit according to claim 10, **characterised in that** the gears (34, 36, 38, 40) for changing the speeds of the gearbox (14) are increased in size in order to obtain the large lateral offset between the input shaft (42) and the output shaft (44).

12. Drive unit according to one or more of the preceding claims, **characterised in that** one axle shaft (54) of the differential (16) extends below the input shaft (42) of the gearbox (14) and a short distance (s₂) after the disconnect-type clutch (26) to the other output end of the differential (16).

13. Drive unit according to one or more of the preceding claims, **characterised in that** the output shaft (44) is pivoted laterally relative to the input shaft (42) in such a manner that the said axle shaft (54) traverses it a short distance (s₁) below the input shaft (42).

## Revendications

1. Ensemble moteur (10) pour véhicules automobiles, avec un moteur à combustion interne, une boîte de vitesse en aval (14) avec un différentiel intégré (16) et un embrayage de coupure (26) disposé entre le moteur à combustion interne et la boîte de vitesses, le différentiel (16) étant entraîné via un engrenage à pignons coniques avec un pignon d'entraînement (46) sur un arbre de sortie (44) de la boîte de vitesses et une couronne de différentiel (48), **caractérisé en ce que** la couronne de différentiel (48) du différentiel (16), vue de dessus, est disposée latéralement à l'embrayage de coupure (26) et en surplombant en partie axialement ce dernier, dans le sens de son axe A.

2. Ensemble moteur conformément à la revendication 1, **caractérisé en ce que**, le carter de différentiel (50) du différentiel (16) logeant les roues coniques de l'essieu et les roues planétaires est, du reste, positionné latéralement près de l'embrayage de coupure (26).

3. Ensemble moteur conformément à la revendication 1 ou 2, **caractérisé en ce que**, l'embrayage de coupure est un embrayage à friction multidisques (26) de petite construction dans la projection radiale.

4. Ensemble moteur conformément à l'une ou plusieurs des revendications précédentes, **caractérisé en ce que**, le carter de différentiel (30a) du différentiel (16) de la boîte de vitesses (14) est monté partiellement autour de l'embrayage de coupure (26), le volant moteur (20) du moteur à combustion interne (12) portant l'embrayage de coupure (26) surplombant, en déviation radiale, la couronne (48) (ligne B, fig. 3).

5. Ensemble moteur conformément à l'une ou plusieurs des revendications précédentes, **caractérisé en ce que**, le carter de différentiel (30a) est partiellement formé par le carter adjacent (24) du moteur à combustion interne (12) et / ou **en ce que** le couvercle de carter (56) d'un seul tenant recouvrant latéralement le différentiel (16) recouvre également partiellement le carter (24) du moteur à combustion interne (12).

6. Ensemble moteur conformément à l'une ou plusieurs des revendications précédentes, **caractérisé en ce que**, le couvercle de carter (56') d'un seul tenant, recouvrant latéralement le différentiel (16) recouvre partiellement la bride de fixation du moteur (240) et **en ce que** la boîte de vitesses est raccordée à l'ensemble moteur (24), dans lequel des moyens de raccord (560, 561), de préférence de longues vis, sont introduits à peu près longitudinalement par rapport à l'axe longitudinal de la boîte de vitesses (562) sous le contour du couvercle de carter et sont reliés à la bride de fixation du moteur (240).

7. Ensemble moteur conformément à l'une ou plusieurs des revendications 1 à 6, **caractérisé en ce que**, la boîte de vitesses (14) présente une disposition d'arbre avec un arbre primaire (42) et un arbre de sortie (44) portant le pignon d'entraînement (46) pour l'entraînement du différentiel (16), le pignon d'entraînement (46) étant dimensionné de telle sorte qu'un écart prédéfini (ligne C, fig. 3) est formé entre l'arbre primaire (42) et l'arbre de sortie (44).

8. Ensemble moteur conformément à la revendication 7, **caractérisé en ce que** l'arbre primaire (42) et l'arbre de sortie (44) sont orientés parallèlement à l'axe.

9. Ensemble moteur conformément à la revendication 7, **caractérisé en ce que** l'arbre de sortie (44'), en partant de la zone du pignon d'entraînement, s'étend au moins partiellement dans le sens de l'arbre primaire (42), pour une réduction croissante de l'écart entre l'arbre primaire (42) et l'arbre de sortie (44').

10. Ensemble moteur conformément à l'une ou plusieurs des revendications 1 à 7, **caractérisé en ce que**, les écarts d'axe entre l'arbre primaire (42) et l'arbre de sortie (44) sont augmentés en conséquence pour la création d'un plus grand déport latéral.

11. Ensemble moteur conformément à la revendication 10, **caractérisé en ce que** les roues dentées (34, 36, 38, 40) pour les rapports de la boîte de vitesses (14) pour l'obtention du grand déport latéral entre l'arbre primaire (42) et l'arbre de sortie (44) sont réalisées en étant agrandies.

12. Ensemble moteur conformément à l'une ou plusieurs des revendications précédentes, **caractérisé en ce que**, l'un des arbres d'essieu (54) du différentiel (16) s'étend en dessous de l'arbre primaire (42) de la boîte de vitesses (14) et en se raccordant avec un faible écartement (S₂) à l'embrayage de coupure (26) par rapport à l'autre côté de sortie du différentiel (16).

13. Ensemble moteur conformément à l'une ou plusieurs des revendications précédentes, **caractérisé en ce que**, l'arbre de sortie (44) est disposé pivotant latéralement par rapport à l'arbre primaire (42), de sorte que le susdit arbre d'essieu (54) croise ce dernier dans un faible écartement (S₁) en dessous de l'arbre primaire (42).
